Europäisches Patentamt

European Patent Office

Office européen des brevets

(19)

(11) Veröffentlichungsnummer : **0 368 091 B1**

(12) # EUROPÄISCHE PATENTSCHRIFT

(45) Veröffentlichungstag der Patentschrift :
25.03.92 Patentblatt 92/13

(51) Int. Cl.$^5$ : **B60S 1/38,** F16C 11/04

(21) Anmeldenummer : 89119961.4

(22) Anmeldetag : 27.10.89

(54) **Wischblatt und Verfahren zu dessen Herstellung.**

(30) Priorität : **11.11.88 DE 3838274**

(43) Veröffentlichungstag der Anmeldung :
**16.05.90 Patentblatt 90/20**

(45) Bekanntmachung des Hinweises auf die
Patenterteilung :
**25.03.92 Patentblatt 92/13**

(84) Benannte Vertragsstaaten :
**ES FR GB IT SE**

(56) Entgegenhaltungen :
**EP-A- 0 236 061
EP-A- 0 289 293
FR-A- 1 388 148
FR-A- 2 453 757
GB-A- 1 293 450
GB-A- 1 352 683**

(73) Patentinhaber : **SWF Auto-Electric GmbH
Stuttgarter Strasse 119 Postfach 135
W-7120 Bietigheim-Bissingen (DE)**

(72) Erfinder : **Bauer, Kurt
Wolfsgrubenstrasse 21
W-7121 Ingersheim 2 (DE)**
Erfinder : **Schmid, Eckhardt
Heilbronner Strasse 62
W-7129 Brackenheim (DE)**
Erfinder : **Scholl, Wolfgang
Gartenstrasse 16
W-7121 Gemmrigheim (DE)**

## Beschreibung

Die Erfindung bezieht sich auf ein Wischblatt, insbesondere für Kraftfahrzeuge, gemäß den Merkmalen des Oberbegriffs des Anspruchs 1.

Aus der DE-B- 27 58 914 ist ein Wischblatt bekannt, bei dem zwischen einem übergeordneten Hauptbügel und einem untergeordneten Krallenbügel ein dünnwandiges, im Querschnitt wenigstens annähernd U-förmiges Distanzstück angeordnet ist, das zwei nach innen ragende Gelenkzapfen aufweist, die in randoffene Aussparungen in den Seitenwangen des Krallenbügels eingreifen. Diese Gelenkzapfen können dabei als Lagerkörper bezeichnet werden, über die der untergeordnete Bügel schwenkbar am übergeordneten Bügel aufgehängt ist. Wischblätter dieser Art haben sich in der Praxis bewährt. Es hat sich allerdings herausgestellt, daß bei übergroßen Beanspruchungen ein unzulässiges Spiel zwischen den Krallenbügeln und den Hauptbügeln nicht immer vermiedern werden kann.

Es sind auch Wischblätter bekannt, bei denen der untergeordnete Bügel an dem übergeordneten Bügel mittels einer Nietverbindung gehalten ist. Bei einer solchen Ausführung besteht ein Korrosionsproblem, weil beim Ausstanzen der Bohrungen in den Seitenwangen der Bügel die Zinkschicht auf diesen metallischen Bügeln beschädigt wird. Dabei wird dann durch die Korrosion der Durchmesser der Bohrungen in den Seitenwangen vergrößert, so daß nach längerer Betriebszeit ebenfalls ein unzulässiges Spiel in der Gelenkverbindung auftritt.

Ein Wischblatt mit den Merkmalen aus dem Oberbegriff des Anspruchs 1 ist aus der FR-A-2 453 757 bekannt. Bei diesem Wischblatt sind ein metallischer übergeordneter Bügel und ein metallischer untergeordneter Bügel im Bereich des Gelenks zwischen ihnen U-förmig mit einem Rücken und zwei Seitenwangen ausgebildet. In die Seitenwangen sind kugelschalenförmige Lageraufnahmen eingedrückt, wobei jeweils eine Lageraufnahme in einer Seitenwange des übergeordneten Bügels und die Lageraufnahme in der benachbarten Seitenwange des untergeordneten Bügels zueinander hin offen sind. Zwischen die beiden Bügel ist ein im wesentlichen U-förmiges Kunststoffteil eingefügt, das an jeder Seitenwange zwei entgegengesetzt abstehende Halbkugeln einstückig aufweist, von denen die eine in die Lageraufnahme des übergeordneten und die andere in die Lageraufnahme des untergeordneten Bügels eingreift.

Die Korrosion dürfte bei dem Wischblatt nach der FR-A-2 453 757 nur geringe Probleme bereiten. Allerdings ist das Material des Künststoffteils einem Verschleiß unterworfen, der trotz einer Verspannung zweier benachbarter Seitenwangen zueinander mit der Zeit zu einem unerwünscht großen Spiel im Gelenk führt. Insbesondere ist ein Spiel senkrecht zur Gelenkachse nach längerer Nutzung des Wischblatts kaum zu vermeiden.

Der vorliegenden Erfindung liegt nun die Aufgabe zugrunde, ein Wischblatt mit einer gegenüber bekannten Ausführungen verbesserten Gelenkverbindung zwischen einem untergeordneten und einem übergeordneten Bügel zu schaffen.

Diese Aufgabe wird erfindungsgemäß mit den kennzeichnenden Merkmalen des Anspruchs 1 gelöst.

Bei einem erfindungsgemäßen Wischblatt werden als Lagerkörper Kugeln verwendet, die für serienmäßige Kugellager vorgesehen sind. Die aus rostfreiem Stahl hergestellten Kugeln haben nämlich eine ausreichende Härte und eine Oberfläche mit einer sehr geringen Rauhtiefe. In die Seitenwangen des übergeordneten Bügels und des untergeordneten Bügels werden dabei kugelkappenartige Gelenkschalen eingeprägt, deren Kontur den kugelartigen Lagerkörpern angepaßt ist. Die Gelenkschalen werden dabei vorzugsweise spanlos eingeprägt, wobei die Schutzschicht (Zinkschicht) auf den metallischen Bügeln nicht verletzt wird. Dadurch wird das Korrosionsverhalten gegenüber den bekannten Ausführungen mit einem Gelenkniet, der in ausgestanzten Bohrungen steckt, wesentlich verbessert. Die Lagerflächen sind durch die Gelenkschalen weitgehend abgedeckt, so daß eine Beschädigung der Lagerflächen durch die schmirgelnde Wirkung von Schmutzpartikeln oder Rostteilchen nicht zu befürchten ist.

Bei Verwendung derartiger Kugeln als Lagerkörper kann man ohne größere Probleme für einen Spielausgleich dadurch sorgen, daß man die Seitenwangen des einen Bügels in Richtung auf die Seitenwangen des anderen Bügels federnd vorspannt.

Durch die zwischen den Gelenkpfannen in den Seitenwangen der beiden Bügel federnd eingespannten Gelenkkugeln kann bereits ein Abstand zwischen dem untergeordneten Krallenbügel und dem übergeordneten Hauptbügel vorgegeben werden, so daß eine metallische Berührung zwischen diesen Bügeln nicht zu befürchten ist. Dennoch wird man bei einer bevorzugten Ausführung ein Distanzstück aus Kunststoff zwischen dem Hauptbügel und dem Krallenbügel vorsehen, das gemäß einer vorteilhaften Weiterbildung der Erfindung zugleich als Montagehilfe für die in Durchbrüche eingerasteten Kugeln dient.

Die vorliegende Erfindung bezieht sich auch auf ein Verfahren zur Herstellung eines Wischblatts, das dadurch gekennzeichnet ist, daß zunächst die Kugeln in die Durchbrüche eines Distanzstücks eingerastet werden, daß dieses Distanzstück dann über den untergeordneten Bügel derart gestülpt wird, daß die Kugeln in die Gelenkpfannen in den Seitenwangen dieses untergeordneten Bügels eingreifen und daß anschließend unter vorübergehender elastischer Verformung der Seitenwangen des untergeordneten Bügels der übergeordnete Bügel über den untergeordneten gestülpt wird, bis die Kugeln in die Gelenkpfannen im übergeordneten Bügel eingreifen. Die Einzelteile des Wischblatts werden also alle in der gleichen Montagerichtung ineinander geführt, was die Herstellung wesentlich erleichtert.

Die Erfindung und deren vorteilhafte Ausgestaltungen werden nachstehend anhand des in der Zeichnung dargestellten Ausführungsbeispiels näher erläutert. Es zeigen:

Fig.1 eine Seitenansicht auf ein Wischblatt und

Fig. 2 einen Schnitt durch das Wischblatt an der Gelenkstelle.

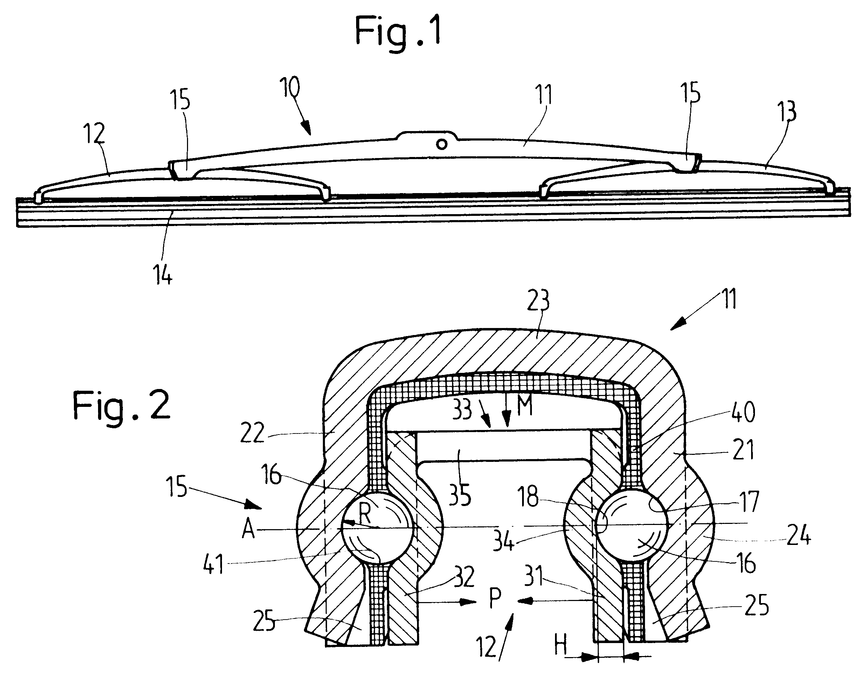

Das insgesamt mit 10 bezeichnete Wischblatt hat ein Tragbügelsystem mit einem Hauptbügel 11 und zwei Krallenbügeln 12 und 13. Der Hauptbügel 11 kann als übergeordneter Bügel bezeichnet werden, während die Krallenbügel 12 und 13 als untergeordnete Bügel am übergeordneten Bügel schwenkbar aufgehängt sind. Es gibt auch Wischblätter, bei denen am Hauptbügel zunächst ein Zwischenbügel und an diesem Zwischenbügel dann ein Krallenbügel aufgehängt ist. Bei solchen Wischblättern kann der Zwischenbügel sowohl als untergeordneter, am Hauptbügel angelenkter Bügel wie auch als übergeordneter den untergeordneten Krallenbügel führender Bügel angesehen werden. Bei dem in Fig. 1 dargestellten Ausführungsbeispiel wird eine insgesamt mit 14 bezeichnete Wischleiste durch die Krallenbügel 12 und 13 in bekannter Weise geführt.

Die Bügel 11, 12 und 13 haben jeweils einen im wesentlichen U-förmigen Querschnitt mit zwei im wesentlichen parallel zueinander stehenden Seitenwangen und einem diese Seitenwangen verbindenden Steg. in Fig. 2 sind die Seitenwangen des Hauptbügels 11 mit 21 und 22 und der Steg des Hauptbügels 11 mit 23 bezeichnet. Zum untergeordneten Krallenbügel 12 gehören die Seitenwangen 31, 32 und der Steg 33.

Wesentlich für die vorliegende Erfindung ist nun die Ausbildung des mit 15 bezeichneten Gelenks zwischen einem übergeordneten Hauptbügel und einem untergeordneten Krallenbügel. Dieses Gelenk 15 soll eine Schwenkbewegung eines untergeordneten Bügels relativ zum übergeordneten Bügel um die Drehachse A ermöglichen.

Aus Fig. 2 geht hervor, daß der übergeordnete Hauptbügel 11 den untergeordneten Krallenbügel 12 übergreift. Die Bügel sind an der Gelenkstelle gewissermaßen ineinandergeschachtelt, wobei die Seitenwangen 21, 22 bzw. 31, 32 im wesentlichen parallel zueinander ausgerichtet sind. Zwischen der Seitenwange 21 des Hauptbügels 11 und der Seitenwange 31 des Krallenbügels 12 ist ein Lagerkörper 16 angeordnet, der im vorliegenden Fall als kugeliger Körper ausgebildet ist. Eine vollständig kugelige Gestalt ist nicht unbedingt erforderlich, doch ist wichtig, daß dieser Lagerkörper 16 eine ballige Stirnfläche 17 aufweist, die in einer insgesamt mit 24 bezeichneten Lagerwanne des Hauptbügels 11 eingreift und sich dort abstützt. Der Lagerkörper 16 hat eine weitere ballige Stirnfläche 18, die sich in einer Lageraufnahme 34 am Krallenbügel 12 abstützt. Die beiden Lageraufnahmen 24 und 34 sind als Gelenkschalen spanlos in die aus Metallblech gefertigten Seitenwangen der Bügel eingearbeitet. Die Lagerflächen dieser Gelenkschalen 24 bzw. 34 sind der Kontur der balligen Stirnfläche bzw. der Oberfläche des kugeligen Lagerkörpers 16 angepaßt.

Diese Gelenkschalen 24 bzw. 34 liegen koaxial zueinander auf der Schwenkachse A, wobei die Gelenkschalen am Hauptbügel nach außen, die Gelenkschalen 34 am Krallenbügel dagegen nach innen geprägt sind derart, daß diese Gelenkschalen 24 und 34 nahezu vollständig einen kugeligen Raum zur Aufnahme dieses Lagerkörpers 16 abgrenzen.

Bei der Ausführung nach Fig. 2 ist die Höhe H der kugelkappenartigen Gelenkschale 34 kleiner als der Radius R des kugeligen Lagerkörpers 16. Entsprechendes gilt auch bezüglich der Gelenkschale 24. Damit ist zwangsläufig sichergestellt, daß der Hauptbügel 11 nicht am Krallenbügel 12 anliegt. Der Raum zwischen den Bügeln wird ausgefüllt durch ein Distanzstück 40 mit einer insgesamt U-förmigen Kontur, das koaxial zwei Durchbrüche 41 aufweist, die gelenkpfannenartig derart ausgebildet sind, daß die Kugeln 16 darin einrastbar sind. Dieses Distanzstück 40 bildet dann mit dem kugelartigen Lagerkörper 16 eine vormontierbare Baueinheit.

Im Bereich der Gelenkstelle 15 hat der Krallenbügel 12 im Steg 33 einen Durchbruch 35, also eine Materialschwächung. Die Seitenwangen 31 und 32 können deshalb in Pfeilrichtung P ausgelenkt werden, was für die Montage wichtig ist. Andererseits sollen diese Seitenwangen 31 und 32 federnd entgegen der Pfeilrichtung P vorgespannt sein derart, daß sie ein etwa auftretendes Spiel im Gelenkbereich selbsttätig ausgleichen.

In Fig. 2 erkennt man noch trichterartige Einführmulden 25, die in die Seitenwangen 21, 22 des Hauptbügels eingeprägt sind und zu den Gelenkpfannen führen. Auch diese Einführmulden sind für die Montage des Wischblatts wichtig, wie im folgenden beschrieben wird.

Haupt- und Krallenbügel sind in bekannter Weise aus einer Blechplatine ausgestanzt, wobei vorteilhafterweise zugleich mit dem Ausstanzvorgang auch die Gelenkpfannen spanlos eingeprägt werden. Nach dem Einprägen der Gelenkpfannen werden die Bügel in ihre U-förmige Kontur abgewinkelt. In die Durchbrüche des aus Kunststoff hergestellten Distanzstückes 40 werden die kugeligen Lagerkörper 16 eingerastet. Die so vormontierte Baueinheit aus Distanzstück 40 und Lagerkörper 16 wird dann in Montagerichtung M quer zur Drehachse A über den U-förmigen Krallenbügel 12 gestülpt. Die kugeligen Lagerkörper 16 rasten dabei in die Gelenkpfannen 34 ein. Danach wird der Hauptbügel 11 ebenfalls in Montagerichtung M über die Baueinheit aus Krallenbügel 12 und Distanzstück 40 gestülpt und in Montagerichtung M derart verschoben, daß die Einführmulden 25 an den Lagerkörpern 16 außen entlanggleiten. Dabei werden die Seitenwangen 31, 32 des Krallenbügels 12 jeweils in Pfeilrichtung elastisch ausgelenkt, bis dann die Lagerkörper 16 mit ihrer äußeren balligen Stirnfläche 17 in die Gelenkpfannen 24 in den Seitenwangen 21 und 22 des Hauptbügels 11 einrasten. Dieser Montagevorgang erfolgt also einheitlich in einer Richtung, was die Herstellung entsprechender Montagewerkzeuge wesentlich vereinfacht. Die Gelenkverbindung ist auch nicht teuerer als die herkömmlichen Nietverbindungen, weil die verwendeten Lagerkörper als Großserienteile billig beschafft werden können. Man verwendet nämlich die Wälzkörper bzw. Kugeln serienmäßiger Kugellager, die aus einem rostfreien Stahl, also einem Werkstoff hoher Härte hergestellt sind und eine Oberfläche mit einer sehr geringen Rauhtiefe < 1 μm aufweisen.

Insgesamt ist also mit der vorliegenden Erfindung eine leichtgängige und präzise Lagerung zwischen einem Krallenbügel und einem Hauptbügel eines Wischblattes geschaffen. Der wesentliche Vorteil liegt dabei in einem gegenüber den bekannten Wischblättern mit einem Gelenkniet verbesserten Korrosionsverhalten, weil weder in den Hauptbügel noch in der Krallenbügel Lagerbohrungen eingestanzt werden. Bei der erfinfungsgemäßen Ausführung wird also die Korrosionsschutzschicht auf den metallischen Bügeln nicht beschädigt. Das Korrosionsverhalten wird auch deshalb verbesert, weil die Lagerflächen weitgehend durch eine geschlossene Umhüllung geschützt sind. Dabei ist das Gelenk so ausgebildet, daß eine selbsttätige Spielnachstellung durch den entsprechend vorgespannten untergeordneten Bügel möglich ist. Schließlich entspricht ein solches Wischblatt auch höheren ästhetischen Anforderungen, weil außen keine Nietköpfe ersichtlich sind.

In der Zeichnung ist eine Ausführung dargestellt, bei der die Lageraufnahmen gewissermaßen als geschlossene Gelenkpfannen ausgebildet sind. Es sind aber durchaus auch Ausführungen vorstellbar, bei denen beispielsweise die Lagerpfanne am untergeordneten Bügel einem zentralen Durchbruch aufweist.

Die Verwendung von Kugeln als Lagerkörper könnte sogar dann vorteilhaft sein, wenn man deren ballige Stirnflächen in Bohrungen in den Seitenwangen der Bügel abstützt. Bei einer solchen Ausführung müßte man natürlich wiederum mit Korrosionsproblemen rechnen, aber nicht in dem Umfang wie bei den bekannten Nietgelenken. Schließlich hätte eine solche Ausführung auch den Vorteil einer selbsttätigen Spielnachstellung, was bei Nietverbindungen so ohne weiteres nicht möglich ist.

## Patentansprüche

1. Wischblatt, insbesondere für Kraftfahrzeuge, mit einem Tragbügelsystem für eine Wischleiste, zu dem wenigstens ein übergeordneter Bügel und ein schwenkbar daran angelenkter untergeordneter Bügel gehört, der im Bereich des Gelenks von dem übergeordneten Bügel übergriffen wird, wobei zwischen Seitenwangen des übergeordneten Bügels und Seitenwangen des untergeordneten Bügels zur Bildung des Gelenks Lagerkörper angeordnet sind, und jeder Lagerkörper (16) wenigstens eine ballige Stirnfläche (17,18) aufweist und sich mit dieser balligen Stirnfläche (17,18) in einer in der Seitenwange (21,22,31,32) eines Bügels (11,12) ausgebildeten Lageraufnahme (24,34) abstützt, dadurch gekennzeichnet, daß als Lagerkörper serienmäßig für Kugellager verwendete Kugeln (16) aus einem Werkstoff hoher Härte verwendet werden, die aus Stahl hergestellt sind und eine Oberfläche mit geringer Rauhtiefe aufweisen, und daß sich eine Kugel (16) einerseits in einer Lageraufnahme (34) in dem untergeordneten und andererseits in einer Lageraufnahme (24) des übergeordneten Bügels (11) abstützt.

2. Wischblatt nach Anspruch I, dadurch gekennzeichnet, daß die Lageraufnahme in der Seitenwange (21,22) des übergeordneten Bügels (11) als Gelenkschale (24) ausgebildet ist.

3. Wischblatt nach Anspruch 2, dadurch gekennzeichnet, daß die Gelenkschale (24) in der Seitenwange (21,22) des übergeordneten Bügels (11) spanlos eingeprägt ist.

4. Wischblatt nach Wenigstens einem der Ansprüche 1 bis 3, dadurch gekennzeichnet, daß die Lageraufnahme des untergeordneten Bügels (12) als Gelenkschale (34) ausgebildet ist.

5. Wischblatt nach Anspruch 4, dadurch gekennzeichnet, daß die Gelenkschale (34) in der Seitenwange (31,32) des untergeordneten Bügels (12) spanlos eingeprägt ist.

6. Wischblatt nach einem der Ansprüche 2 bis 5, dadurch gekennzeichnet, daß die Höhe (H) der kugelkappenartigen Gelenkschalen (24,34) geringer ist als der Radius (R) der Kugel (16) .

7. Wischblatt nach Anspruch 6, dadurch gekennzeichnet, daß zwischen den Seitenwangen (21,22) des übergeordneten Bügels (11) und den Seitenwangen (31,32) des untergeordneten Bügels (12) ein Distanzstück (40) aus Kunststoff angeordnet ist.

8. Wischblatt nach Anspruch 7, dadurch gekennzeichnet, daß das Distanzstück (40) gelenkpfannenartige Durchbrüche (41) aufweist, in die die Kugeln (16) einrastbar sind.

9. Wischblatt nach wenigstens einem der vorhergehenden Ansprüche, dadurch gekennzeichnet, daß die

**4**

Seitenwangen des einen Bügels, vorzugsweise die Seitenwangen (31,32) des untergeordneten Bügels (12), in Richtung auf die Seitenwangen (21,22) des anderen Bügels (11) federnd vorgespannt sind.

10. Wischblatt nach Anspruch 9, dadurch gekennzeichnet, daß der die Seitenwangen (31,32) des untergeordneten Bügels (12) verbindende Steg (33) einen Durchbruch (35) aufweist.

11. Wischblatt nach wenigstens einem der vorhergehenden Ansprüche, dadurch gekennzeichnet, daß wenigstens zu den Gelenkschalen (24) in dem einen Bügel (11) trichterartige Einführmulden (25) für die Kugeln (16) führen.

12. Wischblatt nach wenigstens einem der vorhergehenden Ansprüche, dadurch gekennzeichnet, daß die Seitenwangen (21,22;31,32) der Bügel an der Gelenkstelle (15) im wesentlichem parallel zueinander ausgerichtet sind und daß in die Seitenwangen (21,22) des übergeordneten Bügels (11) koaxial zueinander nach außen vorstehende geschlossene Gelenkschalen (24) eingeprägt sind, daß in die Seitenwangen (31,32) des untergeordneten Bügels (12) koaxial zueinander und koaxial zu den Gelenkschalen (24) im übergeordneten Bügel (11) angeordnete, aufeinander zuweisende, vorzugsweise ebenfalls geschlossene Gelenkschalen (34) eingeprägt sind und daß zwischen den Gelenkschalen (24) im übergeordneten Bügel (11) und den Gelenkschalen (34) im untergeordneten Bügel (12) jeweils eine Gelenkkugel (16) aus einem nichtrostenden Stahl verspannt ist.

13. Verfahren zur Herstellung eines Wischblatts nach einem der vorhergehenden Ansprüche, dadurch gekennzeichnet, daß zunächst die Kugeln (16) in die Durchbrüche eines Distanzstücks (40) eingerastet werden, daß dieses Distanzstück (40) dann über den untergeordneten Bügel (12,13) derart gestülpt wird, daß die Kugeln (16) in die Gelenkschalen in den Seitenwangen (31,32) dieses untergeordneten Bügels (12,13) eingreifen und daß anschließend unter vorübergehender elastischer Verformung der Seitenwangen (31,32) des untergeordneten Bügels (12,13) der übergeordnete Bügel (11) über den untergeordneten (12,13) gestülpt wird, bis die Kugeln (16) in die Gelenkschalen im übergeordneten Bügel (11) eingreifen.

## Claims

1. A wiper blade, in particular for motor vehicles, with a supporting yoke system for a wiper element comprising at least one primary yoke and one secondary yoke swivellably articulated thereon, which secondary yoke is overlapped by the primary yoke in the area of the joint, whereby bearing bodies for forming the joint are arranged between side walls of the primary yoke and side walls of the secondary yoke, and each bearing body (16) has at least one crowned front face (17, 18) and is supported by said crowned front face (17, 18) in a bearing seat (24, 34) formed into the side wall (21, 22, 31, 32) of a yoke (11, 12), wherein balls (16), of a material of high hardness made for mass-produced ball bearings, are used as bearing bodies, which balls (16) are made from steel and comprise a surface with a low roughness factor, and wherein a ball (16) is supported on the one hand in a bearing seat (34) in the secondary yoke and on the other hand in a bearing seat (24) of the primary yoke (11).

2. A wiper blade according to claim 1, wherein the bearing seat in the side wall (21, 22) of the primary yoke (11) is formed as a socket joint (24).

3. A wiper blade according to claim 2, wherein the socket joint (24) in the side wall (21, 22) of the primary yoke (11) is pressed in without cutting.

4. A wiper blade according to at least one of the claims 1 to 3, wherein the bearing seat of the secondary yoke (12) is formed as a socket joint (34).

5. A wiper blade according to claim 4, wherein the socket joint (34) in the side wall (31, 32) of the secondary yoke (12) is pressed in without cutting.

6. A wiper blade according to one of the claims 2 to 5, wherein the height (H) of the socket joints (24, 34) formed as spherical caps is smaller than the radius (R) of the ball (16).

7. A wiper blade according to claim 6, wherein a spacer (40) made from plastics is arranged between the side walls (21, 22) of the primary yoke (11) and the side walls (31, 32) of the secondary yoke (12).

8. A wiper blade according to claim 7, wherein the spacer (40) has apertures (41) formed in the manner of socket joints, in which the balls (16) may engage.

9. A wiper blade according to at least one of the preceding claims, wherein the side walls of the one yoke, preferably the side walls (31, 32) of the secondary yoke (12), are resiliently prestressed in the direction of the side walls (21, 22) of the other yoke (11).

10. A wiper blade according to claim 9, wherein the web (33) connecting the side walls (31, 32) of the secondary yoke (12) comprises an aperture (35).

11. A wiper blade according to at least one of the preceding claims, wherein funnel-shaped inserting depressions (25) for the balls (16) lead at least to the socket joints (24) of one yoke (11).

12. A wiper blade according to at least one of the preceding claims, wherein in the moving joint (15) the side walls (21, 22; 31, 32) of the yokes are substantially aligned in parallel to each other and wherein in the side walls (21, 22) of the primary yoke (11) socket joints (24) are pressed which are arranged coaxially to each other and project to the outside, wherein in the side walls (31, 32) of the secondary yoke (12) are preferably also pressed closed socket joints (34) arranged coaxially to each other and coaxially to the socket joints (24) in the primary yoke (11) and extending towards each other and wherein between the socket joints (24) in the primary yoke (11) and the socket joints (34) in the secondary yoke (12) there is braced one ball (16) each made from stainless steel.

13. A method for the production of a wiper balde according to at least one of the preceding claims, wherein at first the balls (16) are engaged into the apertures of a spacer (40), wherein said spacer (40) is thereafter slipped on the secondary yoke (12, 13) in such a way that the balls (16) engage into the socket joints of the side walls (31, 32) of said secondary yoke (12, 13) and thereafter, under momentary elastic deformation of the side walls (31, 32) of the secondary yoke (12, 13), the primary yoke (11) is slipped on the secondary yoke (12, 13) until the balls (16) engage into the socket joints of the primary yoke (11).

## Revendications

1. Balai d'essuie-glace, notamment pour véhicule, comprenant un système d'étriers servant à porter une lame d'essuie-glace et comportant au moins un étrier principal et un étrier secondaire qui est articulé sur ce dernier d'une manière oscillante et est chevauché par cet étrier principal dans la zone de l'articulation, tandis que des éléments de portée sont disposés enre des ailes latérales de l'étrier principal et des ailes latérales de l'étrier secondaire afin de former l'articulation, chaque élément de portée (16) comportant au moins une surface frontale bombée (17, 18) et prenant appui, par cette surface frontale bombée (17, 18), dans un logement de portée (24, 34) réalisé dans l'aile latérale (21, 22, 31, 32) d'un étrier (11, 12), caractérisé en ce que, comme éléments de portée, on utilise des billes (16), en un matériau de dureté élevée et servant en série pour des roulements à billes, qui sont en acier et comportant une surface à faible profondeur de rugosité et en ce qu'une bille (16) prend appui, d'une part, dans un logement de portée (34) de l'étrier secondaire et, d'autre part, dans un logement de portée (24) de l'étrier principal (11).

2. Balai d'essuie-glace suivant la revendication 1, caractérisé en ce que le logement de portée ménagé dans l'aile latérale (21, 22) de l'étrier principal (11) est réalisé sous la forme d'une cuvette d'articulation (24).

3. Balai d'essuie-glace suivant la revendication 2, caractérisé en ce que la cuvette d'articulation (24) ménagée dans l'aile latérale (21, 22) de l'étrier principal (11) est réalisée sous une forme repoussée sans contrainte.

4. Balai d'essuie-glace suivant au moins l'une des revendications 1 à 3, caractérisé en ce que le logement de portée de l'étrier secondaire (12) est réalisé sous la forme d'une cuvette d'articulation (34).

5. Balai d'essuie-glace suivant la revendication 4, caractérisé en ce que la cuvette d'articulation (34) ménagée dans l'aile latérale (31, 32) de l'étrier secondaire (12) est réalisée sous une forme repoussée sans contrainte.

6. Balai d'essuie-glace suivant l'une des revendications 2 à 5, caractérisé en ce que la hauteur (H) des cuvettes d'articulation (24, 34) en forme de calotte sphérique est inférieure au rayon (R) des billes (16).

7. Balai d'essuie-glace suivant la revendication 6, caractérisé en ce qu'une pièce d'espacement (40) en matière plastique est disposée entre les ailes latérales (21, 22) de l'étrier principal (11) et les ailes latérales (31, 32) de l'étrier secondaire (12).

8. Balai d'essuie-glace suivant la revendication 7, caractérisé en ce que la pièce d'espacement (40) comporte des découpes (41), en forme de cavité d'articulation, dans lesquelles les billes (16) peuvent s'enclencher.

9. Balai d'essuie-glace suivant au moins l'une des revendications précédentes, caractérisé en ce que les ailes latérales de l'un des étriers, de préférence les ailes latérales (31, 32) de l'étrier secondaire (12), sont l'objet d'une précontrainte élastique s'exerçant vers les ailes latérales (21, 22) de l'autre étrier (11).

10. Balai d'essuie-glace suivant la revendication 9, caractérisé en ce que l'âme (33) reliant les ailes latérales (31, 32) de l'étrier secondaire (12) comporte une découpe (35).

11. Balai d'essuie-glace suivant au moins l'une des revendications précédentes, caractérisé en ce que des couloirs (25) d'introduction des billes (16), ayant une forme d'entonnoir, conduisent au moins aux cuvettes d'articulation (24) ménagées dans l'un (11) des étriers.

12. Balai d'essuie-glace suivant au moins l'une des revendications précédentes, caractérisé en ce que les ailes latérales (21, 22,; 31, 32) des étriers sont essentiellement parallèles entre elles dans la zone d'articulation (15), en ce que des cuvettes d'articulation (24), fermées et faisant saillie vers l'extérieur, sont réalisées sous une forme repoussée, d'une manière coaxiale entre elles, dans les ailes latérales (21, 22) de l'étrier principal (11), en ce que des cuvettes d'articulation (34), se faisant face et de préférence également fermées, sont réalisées sous une forme repoussée, d'une manière coaxiale entre elles et d'une manière coaxiale aux cuvettes d'articulation (24) de l'étrier principal (11), dans les ailes latérales (31, 32) de l'étrier secondaire (12) et en ce qu'une bille d'articulation (16) en acier inoxydable est maintenue d'une manière serrée entre chaque paire de cuvettes constituées d'une cuvette d'articulation (24) de l'étrier principal (11) et d'une cuvette d'articulation (34) de l'étrier secondaire (12).

13. Procédé de réalisation d'un balai d'essuie-glace suivant l'une des revendications précédentes, caractérisé en ce qu'on enclenche d'abord les billes (16) dans les découpes d'une pièce d'espacement (40), en ce qu'on coiffe alors l'étrier secondaire (12, 13) de cette pièce d'espacement (40) de telle façon que les billes (16) s'engagent dans les cuvettes d'articulation ménagées dans les ailes latérales (31, 32) de cet étrier secondaire (12, 13) et en ce qu'on coiffe enfin l'étrier secondaire (12, 13) de l'étrier principal (11), en déformant provisoirement d'une manière élastique les ailes latérales (31, 32) de l'étrier secondaire (12, 13), jusqu'à ce que les billes (16) s'engagent dans les cuvettes d'articulation de l'étrier principal (11).

Fig.1

Fig.2